# EUROPEAN PATENT APPLICATION

(11) **EP 3 113 279 A1**
(43) Date of publication of application: **04.01.2017**
(21) Application number: 15174897.7
(22) Date of filing: 01.07.2015
(51) Int. Cl.: H01M 10/6568, H01G 2/08, H01M 10/6569, H01M 10/617

(54) **BATTERY COOLING**

(71) Applicant: ABB Schweiz AG, 5400 Baden (CH)
(72) Inventor: Pathey, Timothy, 8004 Zürich (CH); Sologubenko, Oleksandr, 8906 Bonstetten (CH); Flückiger, Reto, 8055 Zürich (CH)
(74) Representative: ABB Patent Attorneys

(57) **Abstract**

The present invention is concerned with a cooling process for electrical or electrochemical charge storage devices. According to the invention, a charge storage device with a vertical arrangement and fluidal interconnection of modules is proposed that allows for the distribution, evaporation and recycling of a coolant based on a single two-phase fluid cooling circuit. The device is adapted for an equal distribution of cooling fluid throughout the modules of the arrangement to support an equal temperature distribution by means of immersed two-phase dielectric liquid cooling. The latter provides the same temperature of cooling fluid for all cells in the device as long as the fluid remains in the saturated state at the same pressure.

## Description

### FIELD OF THE INVENTION

The invention relates to the field of cooling or temperature management of charge storage devices such as batteries. Specifically, it departs from a charge storage device with modules comprising horizontally displaced and electrically connected cells cooled by two-phase cooling based on a cooling fluid.

### BACKGROUND OF THE INVENTION

Electrical or electrochemical charge storage devices such as Lithium-Ion Batteries (LIB), Lithium-Ion Capacitors (LIC, also known as hybrid or asymmetric capacitors), electrochemical Double-Layer Capacitors (DLC), or Lithium-Titanate batteries (LTO) include cells made by suitably rolling a layered structure of conducting and isolating material of up to ten meters in length. The cells have a cylindrical shape with a cylinder axis parallel to the rolled layers as well as top and bottom faces or terminals for electrically contacting the conductive layers or metallic foils. Such a structure may exhibit a pronounced anisotropic thermal conductivity, with an in-plane thermal conductivity in the direction of the axis and towards the faces exceeding a radial thermal conductivity perpendicular to the layers by a factor of twenty or more. Cooling a side length of the rolled layers via the top and/or bottom faces of the cell therefore would appear advantageous both in terms of efficiency and homogeneity among the layers of the cell.

Inhomogeneous cooling among different charge storage cells in a battery or capacitor module is problematic. In electrical series-connection every cell is typically loaded with the same current and should be in the same state of charge, hence the thermal load of each cell is expected to be similar. Nevertheless the temperature distribution in a module may be highly inhomogeneous due to the design of the cooling system and the contacting busbars. The busbars are connecting the different cells and may carry high currents and therefore produce high resistive losses. Additionally the contact points between busbar and cell terminals may contribute to significant local heating and hotspot problems that are hard to solve with conventional cooling methods. Large thermal inhomogeneity results in different degradation rates of the cells. If a cell degrades also the heat generation increases and therefore even accelerates degradation. The first cell to fail stops the systems and requires replacement. Therefore it is important that all cells are thermally homogenous.

A cooling process associated with sensible heat of a cooling fluid requires the temperature of the fluid to change. This aspect necessarily leads to inhomogeneous cooling of a battery pack or module consisting of multiple cells cooled in series, since the temperature of fluid passing several cells increases continuously. On the other hand, two-phase cooling, phase-change cooling, evaporative cooling, or immersion boiling processes rely on latent heat of a cooling liquid rather than on sensible heat of a cooling fluid. By way of example, the efficiency of water boiling or condensing may be orders of magnitude higher than the efficiency of natural convection of water, and still appreciably higher than the efficiency of single phase forced convection of water. Comparable findings may be expected for the cooling of batteries, electrochemical supercapcitors or capacitors based on the use of a dielectric liquid with liquid/gas boiling point "tuned" to thermal requirements of the system, for instance with a pressure-dependent boiling point between 20°C and 50°C.

Phase-change cooling may be done by immersion of the cells of an LIB into a pool of saturated dielectric fluid such as fluorocarbons. The major advantage of boiling cooling is in improved temperature uniformity of the battery cells, due to its intrinsically isothermal nature. The patent US 8790809 B2 describes the housing of a multi-electrochemical-cell battery within a module and the presence of a two-phase cooling fluid. The battery housing is partially filled with a cooling liquid, wherein at least a portion of the cooling liquid is evaporated. Very homogeneous temperature distribution between cells of a battery improves battery lifetime considerably.

### DESCRIPTION OF THE INVENTION

It is therefore an objective of the invention to improve a cooling process of electrical or electrochemical charge storage devices. This objective is achieved by a device and a method according to the independent claims. Preferred embodiments are evident from the dependent patent claims.

According to the invention, a charge storage device with a vertical arrangement and fluidal interconnection of modules is proposed that allows for the distribution, evaporation and recycling of a coolant based on a single two-phase fluid cooling circuit. The device is adapted for an equal distribution of cooling fluid throughout the modules of the arrangement to support an equal temperature distribution by means of immersed two-phase dielectric liquid cooling. The latter ensures a same temperature of cooling fluid for all cells in the device as long as the fluid remains in the saturated state at the same pressure. In case of increased heat generation by a particular cell, more cooling media will be supplied to this cell automatically.

In particular, an electrical or electrochemical charge storage device or system with modules comprises horizontally displaced and electrically series connected cells cooled by a dielectric cooling fluid or coolant in a two-phase cooling circuit. The device comprises a top or upper module as well as a bottom or lower module vertically displaced and arranged in a column. The modules share a common or single cooling fluid circuit with conduits for guiding cooling fluid between the modules and a single condenser for condensing evaporated cooling fluid from both modules.

In a preferred variant of the invention, the device comprises a liquid outlet conduit or sink for draining of excess cooling liquid from the upper module to the lower module. The liquid conduit of a bottommost module may lead to a coolant reservoir in order to prevent an overflow in the bottommost module. A length of the liquid conduit determines a coolant level in the modules, and ultimately a total amount of coolant required for the device. If the length of the conduit is inferior to a cell height, the cells are only partly immersed and less dielectric cooling fluid is required while still achieving excellent homogeneous cooling.

In a preferred variant of the invention, the device comprises gas conduits, conducts or pipes for rising of evaporated fluid from the lower to the higher module. The gas conduits from the topmost modules lead to the common condenser.

In an advantageous embodiment of the invention, each cell of a module has a first and second terminal and the module has a first (plus) and a second (minus) busbar respectively contacting the first and second cell terminals. Both busbars of the module and all first and second terminals are immersed in the cooling liquid, leading to improved cooling of the terminals or cell contacts. Preferably, both busbars of the module are arranged in a lower half of the module and the cells are of mono-polar design with both cell terminals at a same cell side or face. In this arrangement even partly immersed cells benefit from the improved cooling of both terminals while saving on a total amount of dielectric cooling fluid in the device.

In an advantageous embodiment of the invention the device comprises a reservoir in fluidal connection with the bottommost module for collecting and storing coolant liquid. A heating is provided for heating the cooling liquid to a temperature above an ambient temperature of the device and slightly below a boiling or evaporating temperature of the cooling fluid at the chosen operating pressure.

In the context of this invention, the term "charge storage devices" refers to as any device which can store a charge, be it purely electric (as in a power capacitor), electrochemical (as in a battery or supercapacitor (electrochemical double layer capacitance)) or a combination thereof (as in a asymmetric Li-ion capacitor).

### BRIEF DESCRIPTION OF THE DRAWINGS

The subject matter of the invention will be explained in more detail in the following text with reference to preferred exemplary embodiments which are illustrated in the attached drawings, in which:
Fig.1 depicts a cross-sectional view in an axial direction of a charge storage cell;
Fig.2 shows a battery module with eight cells arranged next to each other; and
Fig.3 depicts a charge storage device in the form of a module stack.

### DETAILED DESCRIPTION OF PREFERRED EMBODIMENTS

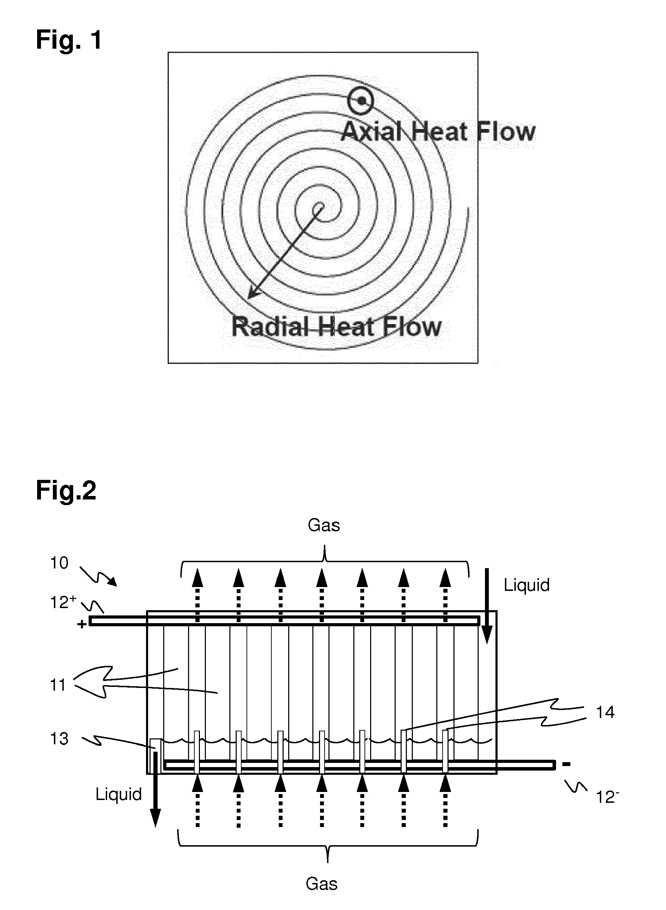

Fig.1 is a cross-sectional view in an axial direction of a charge storage cell. The spiral represents the rolled or wound layers of the cell. The arrows indicate the preferred (axial) and the impeded (radial) heat flow directions.

Fig.2 is a cross-sectional view in a horizontal direction showing a charge storage module 10 with eight charge storage cells 11 arranged next to each other. Two busbars 12⁺, 12⁻ contact the top and the bottom faces of the cells to electrically interconnect the cells in parallel. The busbars extend into a positive and negative pole or terminal at the exterior of the module. A liquid outlet conduit 13 at the bottom of the module allows for excess cooling liquid to leave the module, and acts as a weir to regulate a level of cooling liquid in the module indicated by the wave line. Seven gas conduits 14 arranged between the cells allow for cooling gas to enter the module at the bottom. The module housing and the bottom busbar 12⁻ have openings (not shown) corresponding to the locations of the conduits. Similarly, the top busbar 12⁺ and a cover of the module have openings corresponding to the locations of the conduits in an adjacent module stacked on top of the module 10 (not shown). In all embodiments, a key requirement is that one or both busbars are submersed in the dielectric fluid so that there is a strong thermal pathway from a possible hotspots within the cells to the cooling media surrounding the busbar via the metallic foil within the cells.

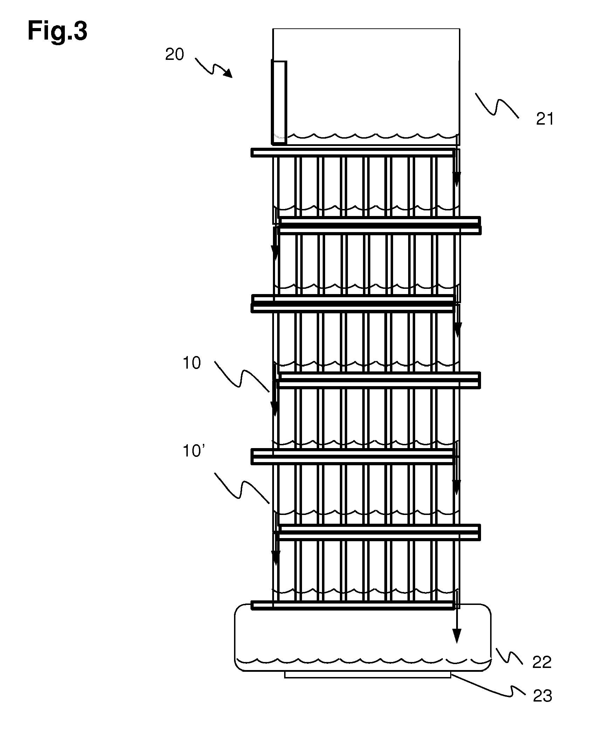

Fig.3 depicts a charge storage device 20 in the form of a tower, pillar, column, stack or rack comprising six modules 10, 10' arranged in horizontal displacement on top of each other. At the top, a condenser 21 is arranged for condensing the gas collected from the topmost module and for recirculating the condensed fluid to the topmost module. At the bottom, a reservoir 22 is arranged for receiving excess overflow liquid from the bottommost module. A heating unit 23 may be provided for heating of the cooling liquid in the reservoir.

The poles of the individual modules are electrically connected in a suitable way to form a modular battery, capacitor, or supercapacitor with the desired electrical properties. Instead of a straight upright arrangement, a staircase type of arrangement including some lateral or horizontal displacement of the modules is also possible, in which case the vertical displacement may even be less than a height of a module. Several modules in turn may be arranged next to each other in module layers, each module being fluidly interconnected to one or several modules of an upper and/or lower layer. In such arrangements no correspondence between fluidal and electrical inter-module connections is required.

In operation, dielectric liquid enters each module from the top at a fixed temperature slightly below the boiling point. Cells and busbars are partly or fully immersed in liquid. As soon as the temperature increases bubbles are formed that rise upwards to the gas conduits that guide the coolant gas to the immediate neighbour on top. After the topmost module the vapor from all modules is condensed and recirculated back to the topmost module in liquid form from where it starts to flow downwards. Alternatively to the gas conduits, a separate vapor outlet manifold may collect and guide the vapor from each module to the condenser via separate vanes not crossing any other stack. In any case, no pump is needed to maintain the coolant flow in the circuit.

With a cell voltage of 4 V and a cell charge of 2 Ah, a parallel connection of 20 cells per module will have some 160 Wh of stored energy. At an overall height of 10 cm per module, a series connection of 200 modules arranged in 20 layers results in a stack or rack of 2 m height with 800 V and 40 Ah. A typical shipping container with 32 racks of this dimension ultimately may store 1 MWh of electrical energy.

In summary, the benefits to the invention include an equal cooling of all cells within a battery rack, allowing for reduced battery aging and longer lifetime due to no "weakest link" failure, as well as a cooling of the busbar that allows for rapid access to a thermal hotspot via the internal electrode foils. The absence of a pump, the inherent scalability and flexibility add to the economic attractiveness of the solution for multiple Battery Energy Storage Systems (BESS).

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A charge storage device (20) with modules comprising horizontally displaced and electrically connected cells (11) cooled by a cooling fluid in a two-phase cooling circuit, **characterized in that** the device comprises an upper module (10) and lower module (10') that are vertically displaced as well as a common cooling fluid circuit for the upper and lower module.

2. The device of claim 1, **characterized in that** the upper module comprises a liquid conduit (13) for guiding excess cooling liquid to the lower module.

3. The device of claim 1 or 2, **characterized in that** the upper module comprises gas conduits (14) for guiding evaporated cooling fluid from the lower module.

4. The device of any of claims 1 to 3, wherein each cell of a module has a first and second terminal and wherein the module has a first and second busbar respectively contacting the first and second terminals, **characterized in that** the first and second busbar and all first and second terminals are immersed in the cooling liquid.

5. The device of any of claims 1 to 4, **characterized in that** it comprises a reservoir (22) for storing cooling liquid and a heating (23) for heating the cooling liquid to a temperature above an ambient temperature and below a boiling temperature of the cooling fluid.

6. The device of any of claims 1 to 5, **characterized in that** the cooling circuit is devoid of a pump for circulating the cooling fluid.

7. A method of cooling a charge storage device (20) with an upper module (10) and a lower module (10'), each module comprising horizontally displaced and electrically connected cells (11) cooled by a cooling fluid of a two-phase cooling circuit, the method comprising
- providing cooling liquid to the upper module;
- guiding excess cooling liquid from the upper to the lower module;
- evaporating cooling liquid by means of heat from cells of the lower module being charged or discharged;
- guiding evaporated cooling fluid from the lower module to the upper module.
